# EUROPEAN PATENT APPLICATION

(11) **EP 2 299 683 A2**
(43) Date of publication of application: **23.03.2011**
(21) Application number: 10172967.1
(22) Date of filing: 16.08.2010
(51) Int. Cl.: H04N 1/203

(54) **Image scanning device and document transportation method**

(30) Priority: 04.09.2009 JP 2009204355
(71) Applicant: Murata Machinery, Ltd., Minami-ku Kyoto-shi Kyoto 601-8326 (JP)
(72) Inventor: Oshima, Osamu, Kyoto 612-8686 (JP)
(74) Representative: Zimmermann, Tankred Klaus

(57) **Abstract**

The invention provides a scanning specifying unit, a first transportation path, a second transportation path, a path switching unit, and a document detection unit. The scanning specifying unit specifies any of a double sided scanning and a single sided scanning for a scanning method of a document. The first transportation path is a transportation path for double sided scanning for scanning a first surface and a second surface of the document in order. The second transportation path is a transportation path for single sided scanning, shorter than the first transportation path, for scanning the second surface of the document. The path switching unit selects any of the first transportation path and the second transportation path based on the specified scanning method. The document detection unit detects the document with the first surface scanned and the second surface not scanned when the double sided scanning is interrupted. The path switching unit selects the second transportation path for the transportation path of the first document in the resumed double sided scanning based on a detection result of the document detection unit.

## Description

### [CROSS-REFERENCE TO RELATED APPLICATIONS]

This application claims priority under 35 U.S.C. 119 to Japanese Patent Application No. 2009-204355, filed on September 4, 2009, which application is hereby incorporated by reference in its entirety.

### BACKGROUND OF THE INVENTION

### 1. Field of the Invention

The present invention relates to image scanning devices and document transportation methods, and more specifically, to improving an image scanning device that rescans a document that is not finished with scanning when double sided scanning of the document is interrupted.

### 2. Description of Related Art

An image scanning device capable of automatically transporting two or more documents, and sequentially scanning such documents is being widely used. An image scanning device capable of carrying out double sided scanning of the document through automatic transportation is also widely used. The image scanning device capable of carrying out the double sided scanning is known to include a one-path-two-scanner method of carrying out the double sided scanning of the document using two image sensors, and a two-path-one-scanner method of inverting the front and the back of the document during the automatic transportation and carrying out the double sided scanning of the document using one image sensor.

The double sided scanning of the two-path-one-scanner method includes a switchback method of passing the document twice in the same direction with respect to the image sensor by performing a switchback of switching the transporting direction during the transportation of the document, and a U-turn method of crossing transportation paths using a U-turn path and passing the document twice in opposite directions with respect to the image sensor. If the U-turn method is adopted, the transportation control is easier and the scanning time can be reduced as there is no need to switch the transporting direction.

Such an image scanning device makes an emergency stop on the transportation of the document and interrupts the scanning process when a stop factor, defined in advance, is detected during the document scanning. For example, the scanning process is interrupted when document jam or cover off (open door) is detected. In this case, a user needs to take out the document in the transportation path and place the document on a document tray. Thus, some of the conventional image scanning devices make a display for distinguishing the document, which scanning is finished, and the document, which scanning is not finished. For example, there is known an image scanning device that displays from which number of document the scanning is to be resumed. In such an image scanning device, leakage and redundancy of the document to scan can be avoided in the scanning process resumed after the interruption.

### SUMMARY OF THE INVENTION

In the conventional image scanning device, documents other than the document which scanning of both surfaces is finished at the time of interruption are target of re-scanning when double sided scanning is interrupted. That is, whether or not the scanning is finished is determined in units of documents. Thus, the document with a first surface scanned and a second surface not scanned when scanning is interrupted becomes the target of re-scanning, and both surfaces are scanned after resuming the scanning. That is, the scanning is carried out twice for the first surface for such a document, whereby a wasteful scanning process is carried out.

In order to overcome the problems described above, the present invention aims to provide an image scanning device capable of preventing the same document surface from being redundantly scanned when interrupting the double sided scanning of the document and thereafter resuming the scanning. The present invention also aims to provide an image scanning device capable of preventing redundant scanning on each of the documents when only the scanning of one document surface is finished with respect to two or more documents when the double sided scanning is interrupted. The present invention further aims to provide an image scanning device capable of reducing a transportation time after resuming the scanning by avoiding such redundant scanning.

The problems to be solved by the invention are as described above, and means for solving such problems and the effects thereof will be described below.

An image scanning device according to a first aspect of the invention includes a scanning specifying unit, a first transportation path, a second transportation path, a path switching unit, and a document detection unit. The scanning specifying unit specifies any of a double sided scanning and a single sided scanning for a scanning method of a document. The first transportation path is a transportation path for double sided scanning for scanning a first surface and a second surface of the document in order. The second transportation path is a transportation path for single sided scanning, shorter than the first transportation path, for scanning the second surface of the document. The path switching unit selects any of the first transportation path and the second transportation path based on the specified scanning method. The document detection unit detects a document with the first surface scanned and the second surface not scanned when the double sided scanning is interrupted. The path switching unit selects the second transportation path for the transportation path of the first document in the resumed double sided scanning based on a detection result of the document detection unit.

With such a configuration, the second transportation path is selected for the transportation path of the first document in the resumed double sided scanning if the document with the first surface scanned and the second surface not scanned is detected when the double sided scanning is interrupted. Thus, the scanning of both sides of the document can be completed without redundantly scanning the first surface. Furthermore, the transportation time after the scanning is resumed can be shortened by avoiding the redundant scanning of the first surface as the second transportation path for scanning only the second surface is shorter than the first transportation path.

For example, when continuous scanning of two or more double sided documents is interrupted, the redundant scanning of the first surface can be avoided and the transportation time of the document can be shortened by having the user place the document on the document tray and resume scanning so that the document with the first surface scanned and the second surface not scanned at the time of the interruption is transported the first.

In the image scanning device according to the present invention, in addition to the above-described configuration, the document detection unit detects the number of documents with the first surface scanned and the second surface not scanned when the double sided scanning is interrupted; and the path switching unit switches from the second transportation path to the first transportation path based on the number of documents.

With such a configuration, in the image scanning device in which two or more documents may be in a state where the first surface is scanned and the second surface is not scanned during the continuous scanning of the double sided document, the redundant scanning of the first surface after the scanning is resumed can be avoided and the transportation time of the document can be shortened for all documents with the first surface scanned and the second surface not scanned when the scanning is interrupted.

In the image scanning device according to the present invention, in addition to the above-described configuration, the path switching unit switches the transportation path at a branching point of the first transportation path and the second transportation path; the first transportation path includes a first introducing path for transporting the document from the branching point to a scanning position, and a U-turn path for causing the document that entered from the first introducing path and passed the scanning position to make a U-turn and again enter the scanning position; and the second transportation path includes a second introducing path that joins with the U-turn path without passing the scanning position.

With such a configuration, the document with the first surface scanned and the second surface not scanned when the scanning is interrupted can be transported to the second transportation path in the resumed double sided scanning, and can skip passing the path of one part of the U-turn path. Thus, the second surface, which scanning is not performed, can be scanned while shortening the transportation time of the document.

In addition to the above-described configuration, the image scanning device according to the present invention further includes a counter unit and a notifying unit. The counter unit counts the number of documents that are finished with the double sided scanning during continuous scanning. The notification unit notifies the user the document to be scanned in the resumed double sided scanning based on the count result of the counter unit when the continuous scanning is interrupted.

With such a configuration, the document to be scanned after the interruption is displayed (notified), and the user can place the document on the document tray and resume the scanning by looking at the display. That is, the user can resume scanning without being conscious of the document with the first surface scanned and the second surface not scanned at the time of the interruption.

A scanning method according to the present invention includes a scanning specifying step, a path switching step, and a document detecting step. In the scanning specifying step, any of a double sided scanning and a single sided scanning is specified for a scanning method of the document. In the path switching step, any of a first transportation path for double sided scanning and a second transportation path for single sided scanning is selected based on the specified scanning method. In the document detecting step, a document with the first surface scanned and the second surface not scanned is detected when the double sided scanning is interrupted. In the path switching step, the second transportation path is selected in the resumed double sided scanning based on the detection result of the document detecting step.

The image scanning device according to the present invention can prevent the same document surface from being redundantly scanned when the double sided scanning of the document is interrupted and thereafter resumed. If only the scanning of one document surface is finished for two or more documents when the double sided scanning is interrupted, the redundant scanning can be prevented on each of the documents. Furthermore, the transportation time after the scanning is resumed can be shortened by avoiding such redundant scanning.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is an outer appearance view illustrating one configuration example of an image scanning device according to an embodiment of the present invention;

Fig. 2 is a cross-sectional view illustrating one configuration example of a main section of a multifunction peripheral 100 of Fig. 1;

Figs. 3A to 3D are explanatory views on continuous scanning of a sequential method;

Figs. 4A to 4D are explanatory views on double sided scanning of a batch method;

Fig. 5 is an explanatory view on double sided scanning of an alternate method;

Figs. 6E and 6F are explanatory views on double sided scanning of the alternate method;

Fig. 7 is an explanatory view illustrating one example of a scanning order at a scanning position C2 in each method of continuous scanning;

Fig. 8 is a block diagram illustrating one configuration example on a main section of the multifunction peripheral 100 of Fig. 1;

Fig. 9 is a flowchart illustrating one example of a scanning interrupting process in the multifunction peripheral 100 of Fig. 8; and

Fig. 10 is a flowchart illustrating one example of a scanning process in the multifunction peripheral 100 of Fig. 8.

### DETAILED DESCRIPTION OF PREFERRED EMBODIMENTS

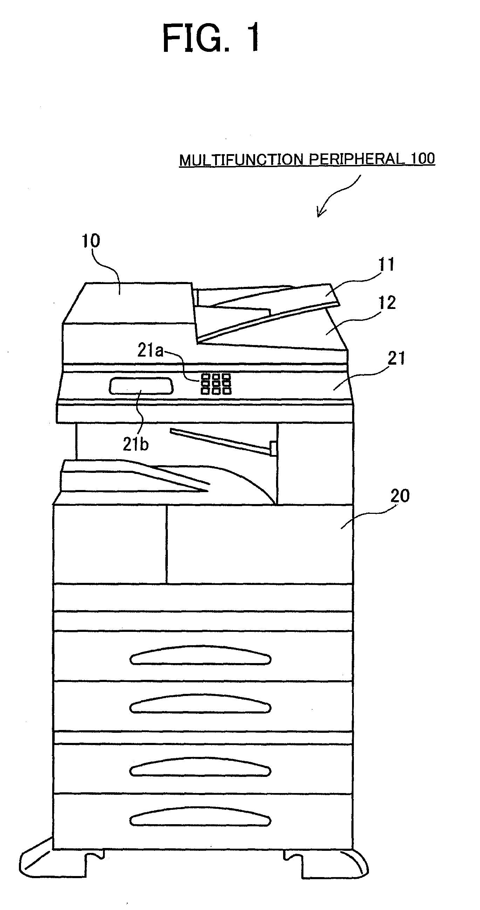

First embodiment Fig. 1 is an outer appearance view illustrating one configuration example of an image scanning device according to an embodiment of the present invention, where a multifunction peripheral 100 is illustrated as one example of the image scanning device. The multifunction peripheral (MFP) 100 is configured by an MFP main body section 20 for performing image scanning, printing, facsimile transmission and reception, and the like, and an ADF (Auto Document Feeder) device 10 for performing automatic transportation of documents at the time of image scanning.

An operation panel 21 of the MFP main body section 20 includes an operation inputting unit 21a such as a start key and a ten key for a user to carry out operation input, and a liquid crystal display unit 21b for displaying and outputting an operation state to the user. For example, the user can specify any of a single sided scanning and a double sided scanning of the document by making the operation input to the operation inputting unit 21a. An error display is made on the liquid crystal display unit 21b when document jam or cover off is detected. Such error display includes the number of documents that are finished with the scanning, and shows the document that requires re-scanning to the user.

A contact glass (not illustrated) is formed on an upper surface of the MFP main body section 20, and the ADF device 10 is arranged in an openable and closable manner on the contact glass. That is, the multifunction peripheral 100 can scan the document in any of a flat bed method of scanning the document placed on the contact glass and an ADF method of scanning the document being automatically transported by the ADF device 10.

The ADF device 10 includes a paper feed tray 11 and an output tray 12, and is interiorly formed with a transportation path. The document in the paper feed tray 11 is separated and taken up one by one, transported along the transportation path, and discharged to the output tray 12. The transportation path is formed to pass on the contact glass of the MFP main body section 20, so that the document is scanned by the MFP main body section 20 when passing on the contact glass.

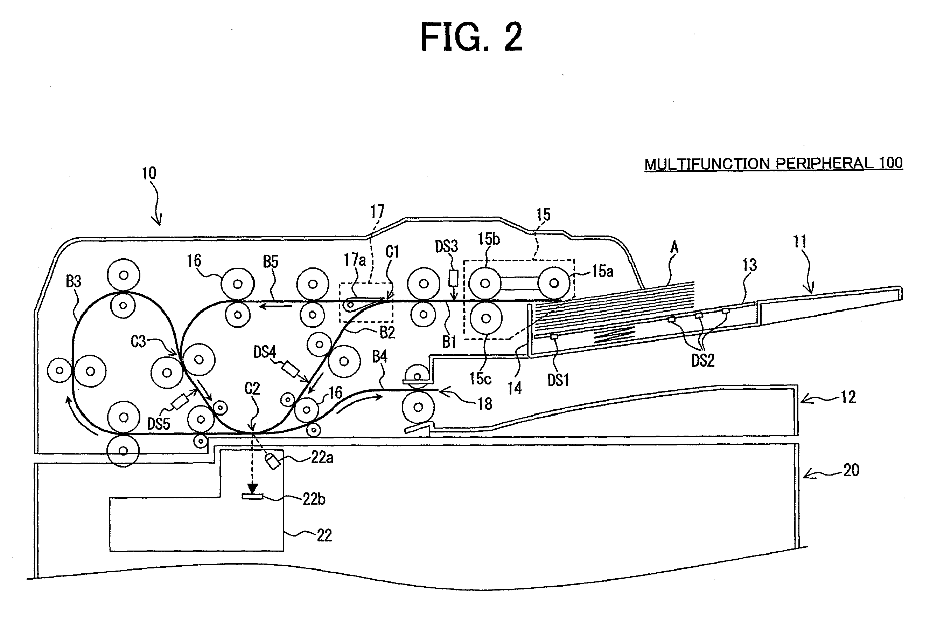

Fig. 2 is a cross-sectional view illustrating one configuration example of the main section of the multifunction peripheral 100 of Fig. 1, and mainly schematically illustrates the internal structure of the ADF device 10. In the figure, B1 to B5 denote transportation paths of the document, C1 denotes a branching point of the transportation paths B2 and B5, C2 denotes a scanning position of the document, and C3 denotes a merging point of the transportation paths B3 and B5.

### <Scanner unit 22>

The scanner unit 22 is an image sensor for optically scanning an image of a document A passing the scanning position C2, and includes a light projector 22a and a line sensor 22b. Irradiation light from the light projector 22a is reflected by the document A on the contact glass, and detected by the line sensor 22b in which a great number of light receiving elements are linearly arranged. A two-dimensional image can be scanned by relatively moving the document A and the line sensor 22b in a direction intersecting the array direction of the light receiving elements. When performing the image scanning in the ADF method, the scanner unit 22 is made stationary and the image scanning is carried out on the document A being transported. The scanner unit 22 can also be used as a document detection sensor for detecting arrival or passing of the document A with respect to the scanning position C2.

A two-pass-one-scanner method is adopted in the multifunction peripheral 100, where the double sided scanning of the document is carried out using one scanner unit 22. The two-pass-one-scanner method is a double sided scanning method of inverting the front and the back of the document and scanning the document twice with the same scanner unit 22. In a typical image scanning device of the two-pass-one-scanner method, the document is switched back so that the front and the back of the document A are inverted, joined right before the scanner unit 22 through a different transportation path, and passed through the scanner unit 22 (scanning position C2) twice in the same direction.

In the multifunction peripheral 100, on the other hand, the front and the back of the document A are inverted by having the document A make a U-turn, and then the document A is passed through the scanner unit 22 (scanning position C2) twice. In this case, the direction the document A passes the scanner unit 22 is the opposite for the first time and the second time.

### <Transportation paths B1 to B5>

The transportation paths B1 to B5 are formed in the ADF device 10, where the transportation path of the document A differs for the single sided scanning and the double sided scanning. When carrying out the double sided scanning, the document is transported in the order of the transportation paths B1, B2, B3, and B4. This transportation path is called the double sided path. When carrying out the single sided scanning, the document is transported in the order of the transportation paths B1, B5, B3, and B4. This transportation path is called the single sided path.

The transportation path B1 is a paper feed path for transporting the document A taken in from the paper feed tray 11 up to the branching point C1, and can be used for both the single sided scanning and the double sided scanning.

The transportation path B2 is an introducing path dedicated for double sided scanning for transporting the document A for double sided scanning from the branching point C1 to the scanning position C2, and transports the document A to the scanning position C2 substantially linearly without making a U-turn. The document that entered from the transportation path B2 and passed the scanning position C2 from right to left enters the transportation path B3.

The transportation path B3 is a U-turn path for causing the document for double sided scanning to make a U-turn and inverting the front and the back. The document that passed the scanning position C2 from right to left is entered to the lower side of the transportation path B3 and transported in the clockwise direction to have the front and back inverted, and then returns to the scanning position C2 from the upper side of the transportation path B3 and passes the scanning position C2 from left to right. That is, the scanning position C2 is passed twice with the front and the back of the document inverted by passing the transportation path B3. In this case, the direction of passing the scanning position C2 is the opposite for the first time and the second time. The downstream side than the merging point C3 of the transportation path B3 is also used in the single sided scanning.

The transportation path B4 is a discharge path for transporting the document that passed the scanning position C2 from left to right to a discharge port 18, and discharging the document to the output tray 12, and is used for both the single sided scanning and the double sided scanning.

The transportation path B5 is an introducing path dedicated for single sided scanning for transporting the document A for single sided scanning from the branching point C1 to the merging point C3 on the transportation path B3, where the transportation path B5 and the transportation path B3 configure a horizontal U-shaped transportation path. The document dedicated for single sided scanning that entered the transportation path B3 from the merging point C3 is passed through the scanning position C2 from left to right, entered to the transportation path B4, and discharged to the output tray 12, exactly in the same manner as the document for double sided scanning which second scanning is to be performed.

### <Paper feed tray 11>

The paper feed tray 11 includes a platen 13 for stacking and placing the documents, and a document stopper 14 for positioning the documents. The platen 13 is biased upward by biasing means such as a spring so that the uppermost document contacts a pickup roller 15a. The document on the platen 13 also has the leading edge (left end in the figure) in the feeding direction positioned by the document stopper 14. Thus, the uppermost document has the leading edge positioned and has the vicinity of the leading edge pushed against the pickup roller 15a.

### <Document take-in unit 15>

The document take-in unit 15 is document take-in means for taking in the document A in the paper feed tray 11 to the transportation path one at a time, and includes the pickup roller 15, a separation roller 15b, and a retard roller 15c. The pickup roller 15a and the separation roller 15b are rotationally driven in the feeding direction of the document, and the retard roller 15c is rotationally driven in the returning direction. Thus, the document A in the paper feed tray 11 is taken in to the transportation path B1 by the pickup roller 15a in order from the top, where only the uppermost document A of the documents A taken in in a multi-feeding state is separated by the separation roller 15b and the retard roller 15c that are rotating in opposite directions to each other, and transported in the feeding direction.

### <Transportation roller 16>

The transportation roller 16 includes a rotationally driven drive roller, and a driven roller arranged facing the drive roller with the transportation path in between. A great number of transportation rollers 16 are arranged on the transportation paths B1 to B5 at an interval shorter than the shortest document length, and the document A is transported on the transportation path by such transportation rollers 16. The transportation roller 16 is rotationally driven by a transportation motor 36 (not illustrated), but a dedicated clutch and the like are required to drive some of the transportation rollers 16 asynchronously with the other transportation rollers 16, whereby the configuration becomes complex and high cost. In the present embodiment, therefore, all transportation rollers 16 are assumed to be driven by the same stepping motor, and rotated synchronously with respect to each other.

### <Path switching unit 17>

A path switching unit 17 is switching means (path switching unit) of the transportation path for selecting any of the single sided path and the double sided path, and is arranged at the branching point C1 of the transportation path. The path switching unit 17 is configured by a nail-shaped rotation member 17a and a solenoid (not illustrated), and switches the transportation paths B2 and B5 by having the solenoid rotate the rotation member 17a. That is, the document A arriving at the branching point C1 is transported to the transportation path B2 if the double sided path is selected, and the document A is transported to the transportation path B5 if the single sided path is selected.

Assuming the lower surface of the document A accommodated in the paper feed tray 11 is the first surface and the upper surface is the second surface, the document A is scanned twice in the order of the first surface and the second surface in the double sided path, and only the second surface of the document A is scanned in the single sided path. In other words, if the double sided path is selected, the document A is guided to the scanning position C2 of the scanner unit 22 through the transportation path B1, the branching point C1, and the transportation path B2 in this order, and has the first surface scanned. Thereafter, the document A is again guided to the scanning position C2 through the transportation path B3, has the second surface scanned, and discharged from the discharge port 18 through the transportation path B4. If the single sided path is selected, the document A is guided to the scanning position C2 of the scanner unit 22 through the transportation path B1, the branching point C1, the transportation path B5, the merging point C3, and the last half of the transportation path B3 in this order, has the second surface scanned, and then discharged from the discharge port 18 through the transportation path B4.

### <Document detection sensors DS1 to DS5>

The ADF device 10 includes five document detection sensors DS1 to DS5. The document detection sensors DS1, DS2 are arranged at the paper feed tray 11 to detect the document A placed on the platen 13. The document detection sensors DS3 to DS5 respectively detect the arrival or the passing of the document A being transported at different detection positions. An optical sensor may be used for the document detection sensors DS1 to DS5.

The document detection sensor DS1 is document placement detection means for detecting whether or not the document A is placed on the paper feed tray 11. For example, the presence of the document A can be determined by embedding a reflective optical sensor in the platen 13 near the document stopper 14, and detecting the vicinity of the leading edge of the document A.

The document detection sensor DS2 is document length detection means for detecting the length of the document A in the feeding direction. For example, whether or not the document length is greater than or equal to a predetermined length can be determined by embedding an optical sensor in the platen 13 behind the document detection sensor DS1. In this case, the maximum document length can be detected if two or more documents A of different sizes are stacked and placed. Furthermore, detection can be made that the document length is a length within a predetermined range by arranging two or more document detection sensors DS2 while making the positions in the feeding direction different from each other.

The document detection sensors DS3 to DS5 are transportation state detection means for monitoring the predefined detection position on the transportation path, and detecting the position of the document A being transported, and detect the arrival or the passing of the document A with respect to the detection position. That is, determination can be made that the document A arrived at the detection position when detecting the leading edge of the document A, and determination can be made that the document A passed the detection position when detecting the trailing edge of the document A.

The document detection sensor DS3 is arranged on the transportation path B1 sandwiched by the separation roller 15b and the branching point C1, and detects the document A taken in from the paper feed tray 11 to the transportation path B1 by the document take-in unit 15.

The document detection sensor DS4 is arranged on the transportation path B2 sandwiched by the branching point C1 and the scanning position C2. The document detection sensor DS4 is a sensor for obtaining the scanning timing of the first surface by the scanner unit 22 in the double sided scanning, and is arranged at a position where the leading edge of the document A passes right before arriving at the scanning position C2. For example, the scanning start timing of the first surface can be obtained from the transportation distance after the document detection sensor DS4 detects the leading edge of the document A. The scanning end timing of the first surface can be obtained from the transportation distance after the document detection sensor DS4 detects the trailing edge of the document A. The transportation distance can be calculated from the rotation amount of the transportation motor 36.

The document detection sensor DS5 is arranged on the transportation path B3 sandwiched by the merging point C3 and the scanning position C2. The document detection sensor DS5 is a sensor for obtaining the scanning timing of the second surface by the scanner unit 22 in the double sided scanning, and is arranged at a position where the leading edge of the document A passes right before arriving at the scanning position C2. For example, the scanning start timing of the second surface can be obtained from the transportation distance after the document detection sensor DS5 detects the leading edge of the document A. The scanning end timing of the second surface can be obtained from the transportation distance after the document detection sensor DS5 detects the trailing edge of the document A. The document detection sensor DS5 is also a sensor for obtaining the scanning timing of the single sided scanning.

The scanning of the document is sometimes interrupted by stop factors such as document jam or cover off. The cover off is when the cover of the ADF device 10 is opened. If the document A is being transported on the transportation path B3 when the double sided scanning is interrupted, the transportation path of the document A is switched to the single sided path when scanning is resumed thereafter. That is, if there exists the document A which scanning of the first surface is finished and the scanning of the second surface is not finished at the time point when the double sided scanning is interrupted, the transportation path of the document A is switched to the single sided path when the scanning is resumed thereafter. Since only the second surface of the document A will be scanned if the single sided path is selected, the second surface, which scanning is not finished, can be scanned without the first surface, which scanning is already finished, being redundantly scanned as the transportation path of the document A is switched to the single sided path. The distance along the transportation path from the branching point C1 to the merging point C3 is shorter for the single sided path than for the double sided path. As described above, the transportation path of the document A is switched to the single sided path, which is shorter than the double sided path, and hence the transportation time of the document A at the time the scanning is resumed can be shortened.

### <Method of continuous scanning>

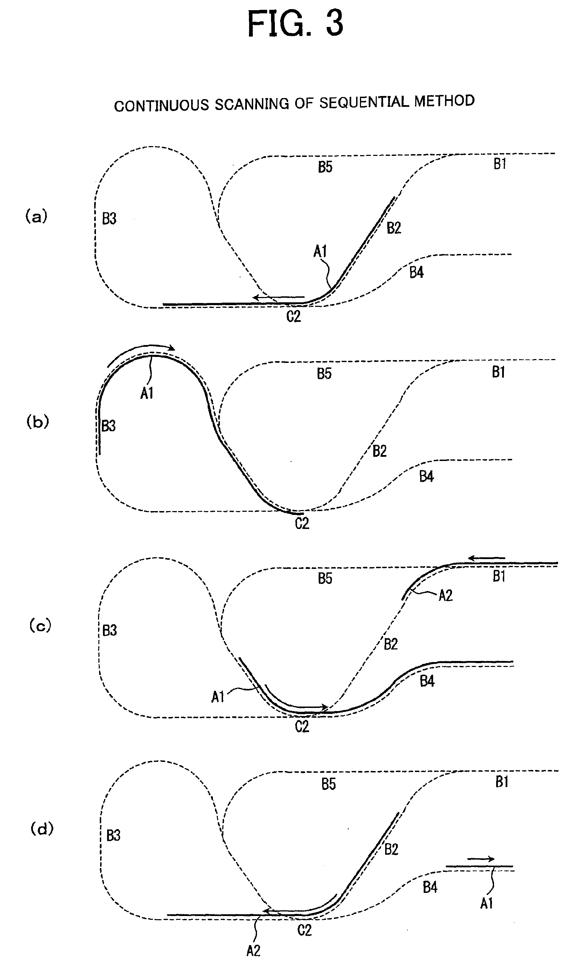

Figs. 3A to 6F are explanatory views illustrating a state in a case where two or more double sided documents A1 to A4 are continuously scanned using the ADF device 10 of Fig. 2. Generally, the ADF device 10 can shorten the scanning time per document at the time of continuous scanning by simultaneously transporting two or more documents. When referring to simultaneously transporting two or more documents, this means having two or more documents coexist in the transportation path. In the case of the ADF device 10, since the double sided path intersects, a plurality of scanning methods can be considered depending on the order the double sided documents A1 to A4, which are taken in in order, pass the scanning position C2. In the present embodiment, any one of the sequential method, the batch method, and the alternate method is assumed to be selected by the user. These scanning methods may be selected based on the document size detected by the document detection sensor DS2 on the paper feed tray 11.

### <Continuous scanning of sequential method>

Figs. 3A to 3D are explanatory views on the continuous scanning of the sequential method, and illustrate the transportation state of the documents A1, A2 on the transportation paths B1 to B5 in time-series order. In the sequential method, two or more documents are not simultaneously transported on the transportation path B3 for U-turn, and the scanning of the subsequent document A2 is started after both sides of the preceding document A1 are scanned.

As illustrated in Figs. 3A to 3C, the document A1 taken in first is transported on the transportation paths B1 to B3 in order, and passes the scanning position C2 twice. As illustrated in Figs. 3C and 3D, the subsequent document A2 is taken in before the preceding document A1 is discharged to the output tray 12 so that the document A2 arrives at the scanning position C2 immediately after the document A1 passed the scanning position C2 twice.

The sequential method is a scanning method that reduces the scanning time per document by starting the take-in of the subsequent document A2 before the preceding document A1 is discharged. The sequential method can be applied as long as the document length is smaller than or equal to the length of the transportation path B3 (U-turn path), and hence is suited for high speed scanning of a relatively long document. However, the scanning time per document becomes long compared to the other two methods, to be described later, since the document interval is very large.

### <Continuous scanning of batch method>

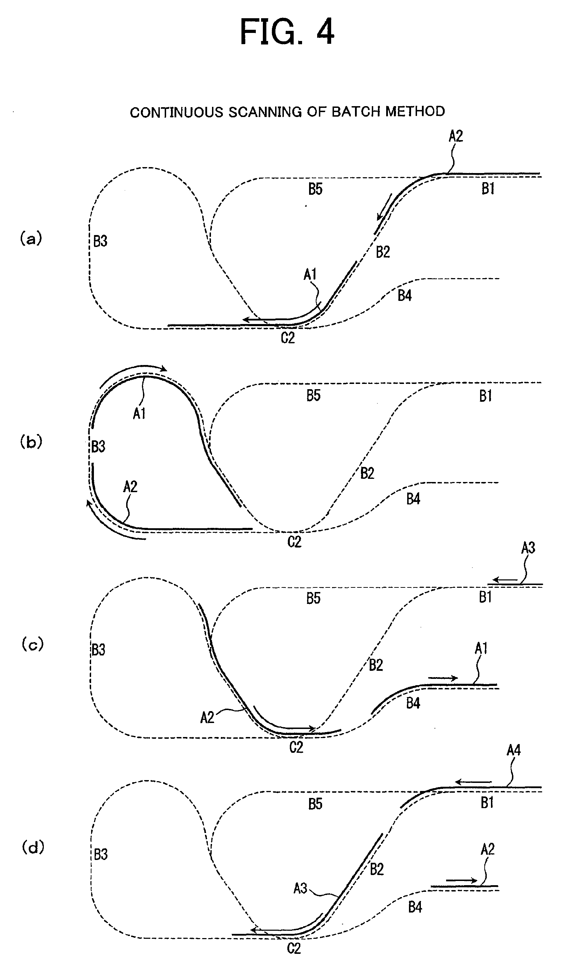

Figs. 4A to 4D are explanatory views on the double sided scanning of the batch method, and illustrate the transportation state of the documents A1 to A3 on the transportation paths B1 to B5 in time-series order. In the batch method, two or more documents A1, A2 are simultaneously transported without being redundant on the transportation path B3 for U-turn, and the double sided scanning is carried out with such a document group as a unit. That is, the preceding documents A1, A2 have the respective first surfaces scanned and then the respective second surfaces scanned, and the scanning of the subsequent document A3 is started after both sides of the preceding documents A1, A2 are scanned.

As illustrated in Figs. 4A and 4B, the documents A1, A2 taken in in order are transported in order on the transportation paths B1 to B3, and are simultaneously transported on the transportation path B3 after the respective first surfaces are scanned. Thereafter, the documents A1, A2 are transported to the transportation path B4 through the scanning position C2, and the respective second surfaces are scanned (Fig. 4C). The subsequent documents A3, A4 are taken in before the preceding document A2 is discharged to the output tray 12 so that the document A3 arrives at the scanning position C2 immediately after both documents A1, A2 passed the scanning position C2 twice.

The batch method is a scanning method that reduces the scanning time per document by continuously entering the documents from any of transportation path B2 and B3 with respect to the scanning position C2 and simultaneously transporting two or more documents on the transportation path B3 to collectively carry out the double sided scanning of two or more documents A1, A2. Here, the scanning time per document is further reduced by starting the take-in of the subsequent document A3 before both documents A1, A2 are discharged. The batch method can further reduce the scanning time per document compared to the sequential method, but cannot be applied unless the document length is smaller than or equal to 1/2 of the length of the transportation path B3 (U-turn path). The sequential method and the batch method are common in being the scanning method in which the first surface of the next document is scanned after the second surface of each document transported on the transportation path B3 is scanned.

### <Continuous scanning of alternate method>

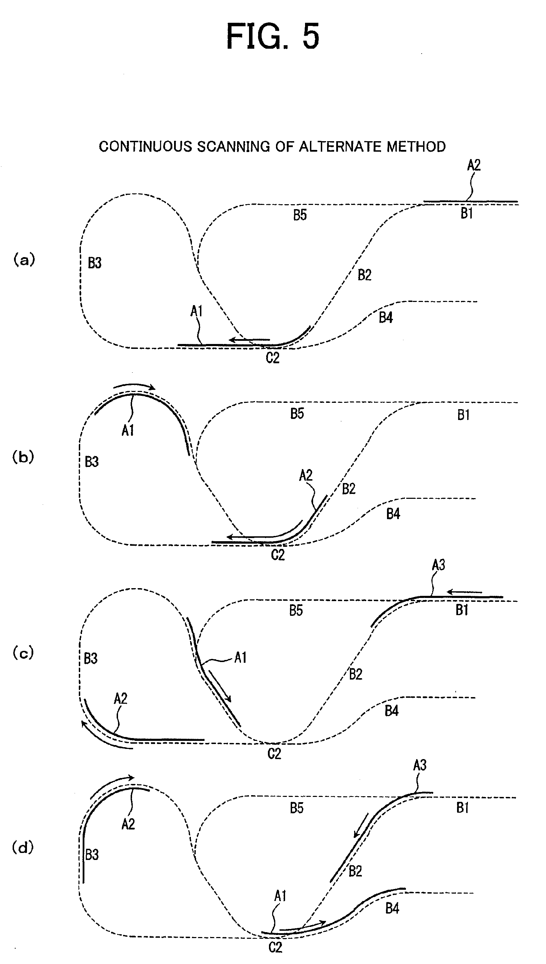

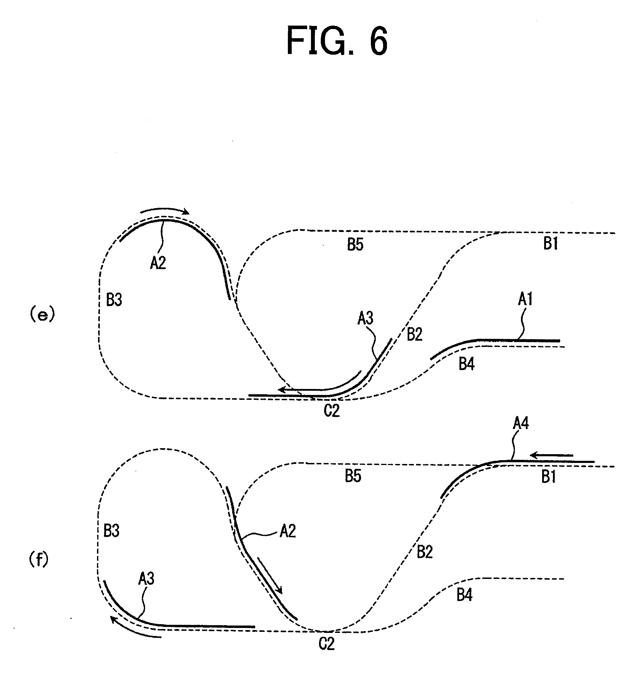

Figs. 5A to 5D and Figs. 6E to 6F are explanatory views on the double sided scanning of the alternate method, and illustrate the transportation state of the documents A1 to A4 on the transportation paths B1 to B5 in time-series order. In the alternate method, two or more documents A1, A2 are simultaneously transported with an interval on the transportation path B3 for U-turn, and the document is alternately sent one at a time from the transportation paths B2 and B3 with respect to the scanning position C2.

As illustrated in Figs. 5A to 5C, the documents A1, A2 that are sequentially taken-in are transported in order on the transportation paths B1 to B3, and are simultaneously transported on the transportation path B3 after the respective first surfaces are scanned. This method differs from the batch method of Figs. 4A to 4D in that an interval worth one or more documents is formed between the documents A1, A2. That is, in the alternate method, the documents A1, A2 are sequentially taken-in with an interval worth one or more documents.

The document A1 is then entered to the scanning position C2 from the transportation path B3, and the second surface thereof is scanned (Fig. 5D). After the document A1 is transported to the transportation path B4, the document A3 is entered to the scanning position C2 from the transportation path B2, and the first surface thereof is scanned (Fig. 6E). Thereafter, the document A3 is transported to the transportation path B3, the document A2 is entered to the scanning position C2 from the transportation path B3, and the second surface thereof is scanned (Fig. 6F). That is, at the scanning position C2, the second surface of the document A1, the first surface of the document A3, and the second surface of the document A2 are scanned in this order. Figs. 5C and 6F illustrate the same state with the document advanced by one document, and continuous scanning can be carried out by repeating the states of Figs. 5C to 6E in order after the state of Fig. 6F.

The alternate method is a method that simultaneously transports two or more documents on the transportation path B3, and alternately scans the first surface and the second surface at the scanning position C2, and is a scanning method that reduces the scanning time per document. The alternate method can further reduce the scanning time per document compared to the batch method, but cannot be applied unless the document length is smaller than or equal to 1/3 of the length of the transportation path B3 (U-turn path).

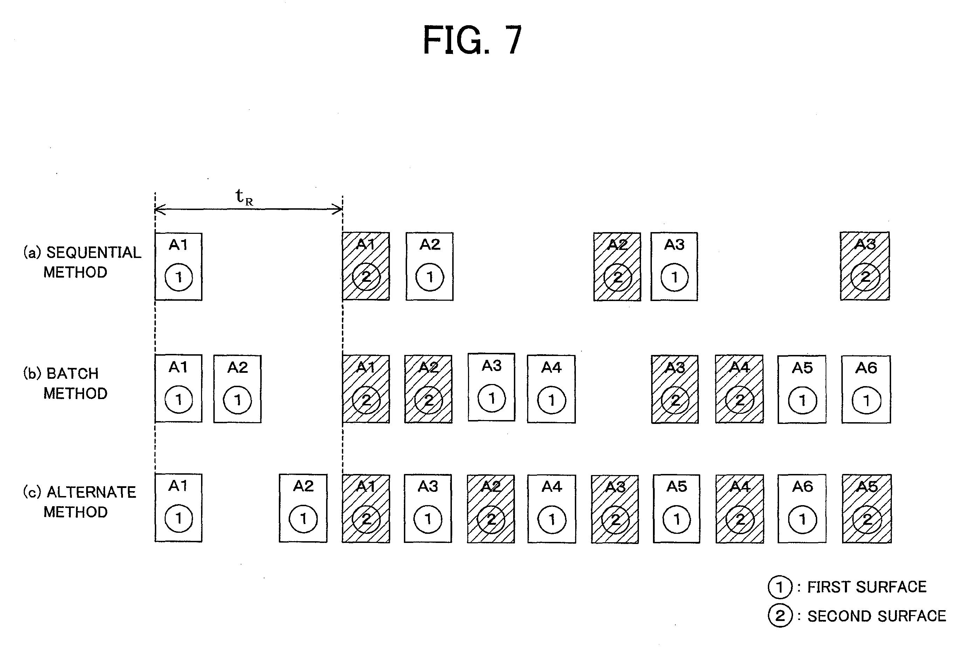

Fig. 7 is an explanatory view illustrating one example of the scanning order at the scanning position C2 in each method of continuous scanning. In Fig. 7, (a) to (c) respectively illustrate the order of document surfaces scanned in the case of the sequential method, the batch method, and the alternate method for the documents A1 to A5 taken in in order.

As illustrated in (a) of Fig. 7, in the case of the sequential method, the first surface and the second surface of the document A2 are scanned in order after the first surface and the second surface of the document A1 are scanned in order. Time t_{R} from the scanning of the first surface to the scanning of the second surface of the same document corresponds to the time it takes the document to pass the transportation path B3.

As illustrated in (b) of Fig. 7, in the case of the batch method, the second surfaces of the documents A1 and A2 are scanned in order after the first surfaces of the documents A1 and S2 are scanned in order. The time t_{R} from the scanning of the first surface to the scanning of the second surface of the same document A1 is the same as in the case of the sequential method, but the first surface of the document A2 is scanned during that time. Thus, the throughput of the document scanning can be enhanced compared to the sequential method.

As illustrated in (c) of Fig. 7, in the case of the alternate method, the scanning of other documents is carried out twice from the scanning of the first surface to the scanning of the second surface of the same document excluding the document A1, which does not have a preceding document. For example, the second surface of the document A1 and the first surface of the document A3 are scanned between the scanning of the first surface to the scanning of the second surface of the document A2. In this manner, the throughput of the document scanning can be further enhanced from the batch method by alternately scanning the first surface and the second surface of different documents.

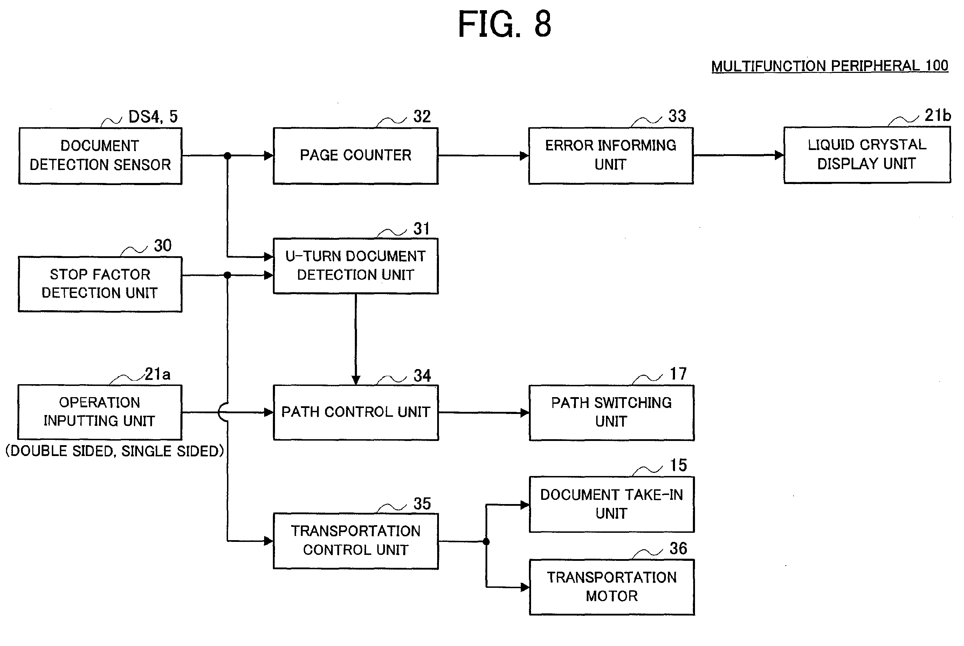

Fig. 8 is a block diagram illustrating one configuration example on the main section of the multifunction peripheral 100 of Fig. 1. The multifunction peripheral 100 includes a stop factor detection unit 30, a U-turn document detection unit 31, a page counter 32, an error informing unit 33, a path control unit 34, a transportation control unit 35, and a transportation motor 36.

### [<Stop factor detection unit 30>

The stop factor detection unit 30 is means for detecting the stop factor that causes the transportation roller 16 to make an emergency stop while transporting documents, and outputting a stop signal. The stop factor is a factor determined based on the detection results of various types of sensors, and is defined in advance. For example, the stop signal is outputted when the occurrence of the document jam is detected based on the detection results of the document detection sensors DS3 to DS5. The stop signal is also outputted when the cover off (open door) of the multifunction peripheral 100 is detected based on the output of the open/close sensor (not illustrated).

### <U-turn document detection unit 31>

The U-turn document detection unit 31 detects the document with the first surface scanned and the second surface not scanned when the double sided scanning is interrupted based on the detection results of the document detection sensors DS4, DS5. That is, the U-turn document detection unit 31 detects the document (U-turn document) making the U-turn that was on the transportation path B3 at the time of the interruption, and outputs U-turn document detection information when the stop signal is outputted from the stop factor detection unit 30 and the double sided scanning is interrupted.

Thus, the U-turn document detection information is outputted when the double sided scanning is interrupted, but is not outputted when the single sided scanning is interrupted. Only one U-turn document is detected at the most during the double sided scanning by the sequential method, but two or more U-turn documents are sometimes detected during the double sided scanning by the batch method or the alternate method. Thus, the U-turn document detection unit 31 detects not only the presence of the U-turn document but also the number of documents thereof, and outputs the U-turn document detection information including the number of U-turn documents.

### <Page counter 32>

The page counter 32 obtains the number of documents that are finished with the double sided scanning based on the detection result of the document detection sensor DS5. Since the double sided document is scanned in the order of the first surface and the second surface, the end of scanning of the second surface can be determined based on the detection result of the document detection sensor DS5. Thus, when performing continuous scanning, the number of documents that are finished with the double sided scanning can be obtained by counting the detecting signals of the document detection sensor DS5.

### <Error informing unit 33>

The error informing unit 33 makes an error display on the liquid crystal display unit 21b and informs the occurrence of the stop factor to the user when the scanning is interrupted by the stop factor. In this case, the document to be scanned in the subsequently resumed scanning is shown based on the number of documents that are finished with the double sided scanning obtained by the page counter 32. For example, if the double sided scanning is finished up to the third document, a message urging to place the fourth and the subsequent documents again on the paper feed tray 11 is displayed on the liquid crystal display unit 21b. The user who sees such error display places the fourth and the subsequent documents on the paper feed tray 11 so that the fourth document is taken in first, operates the start key, and resumes the double sided scanning.

### <Path control unit 34>

The path control unit 34 controls the path switching unit 17 based on the user operation. The double sided scanning or the single sided scanning is specified by the user operation to the operation inputting unit 21a, and the path control unit 34 outputs a path selection signal to the path switching unit 17 based on the user specification. That is, the selection signal of the double sided path is outputted if the double sided scanning is specified, and the selection signal of the single sided path is outputted if the single sided scanning is specified.

In the double sided scanning resumed after the interruption, the path selection signal is generated prioritizing the U-turn document detection information over the user specification. That is, if the U-turn document is detected by the U-turn document detection unit 31 at the time of the interruption, the selection signal of the single sided path is first outputted with respect to the document worth the number of U-turn documents, and the selection signal of the double sided path is outputted with respect to the subsequent documents in the resumed double sided scanning. Therefore, with respect to the document with the first surface scanned and the second surface not scanned when the double sided scanning is interrupted, the single sided path shorter than the double sided path is used so that only the second surface is scanned in the resumed double sided scanning, thereby shortening the transportation time of the document.

### <Transportation control unit 35>

The transportation control unit 35 controls the document take-in unit 15 and the transportation roller 36 based on the operation input of the user or the detection results of the document detection sensors DS1 to DS5, and performs the transportation control of the document. The rotation of the transportation motor 36 starts based on the start operation of the user by the operation inputting unit 21a, and stops based on the detection result of the document detection sensor DS1. The taking in of the document by the document take-in unit 15 is carried out at the timing that ensures a predetermined document interval corresponding to the document scanning method based on the detection results of the sensors DS3 to DS5. Furthermore, when the stop factor is detected by the stop factor detection unit 30, the rotation of the transportation motor 36 is stopped based on the stop signal, and the taking in of the document by the document take-in unit 15 is also stopped.

### <Scanning interrupting process>

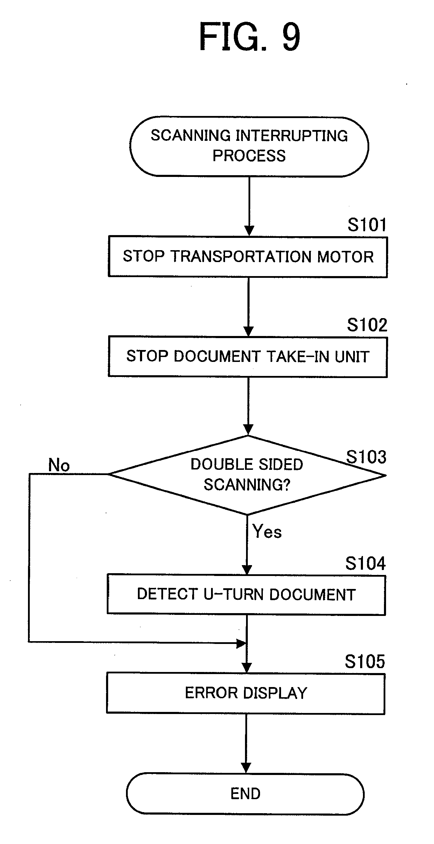

Fig. 9 is a flowchart, and steps S101 to S105 illustrate one example of the scanning interrupting process in the multifunction peripheral 100 of Fig. 8. The scanning interrupting process starts when the stop factor such as document jam or cover off is detected during the document scanning. The stop factor detection unit 30 outputs the stop signal when detecting such a stop factor.

The transportation control unit 35 interrupts the scanning process based on the stop signal. That is, the transportation motor 36 makes an emergency stop to stop the document being transported on the transportation path (step S101). The document take-in unit 15 is also stopped so that a new document is not taken in (step S102).

The U-turn document is then detected by the U-turn document detection unit 31, and the U-turn document detection information is generated (step S103, S104). The U-turn document is the document with the first surface scanned and the second surface not scanned when the scanning is interrupted, and is detected only when the double sided scanning is interrupted. The number of U-turn documents is also detected in the case of the batch method or the alternate method.

Finally, the error informing unit 33 makes an error display on the liquid crystal display unit 21b (step S105). For example, the stop factor detected by the stop factor detection unit 30, and the document page to be placed on the paper feed tray 11 when resuming after the interruption are displayed.

Thus, when the stop factor is detected, the U-turn document (document making the U-turn at the time of interruption) is detected and the detection result is displayed as an error on the liquid crystal display unit 21b. The user who sees the error display places the document to be scanned on the paper feed tray 11, operates the start key of the operation inputting unit 21a, and resumes the scanning process.

### <Scanning process>

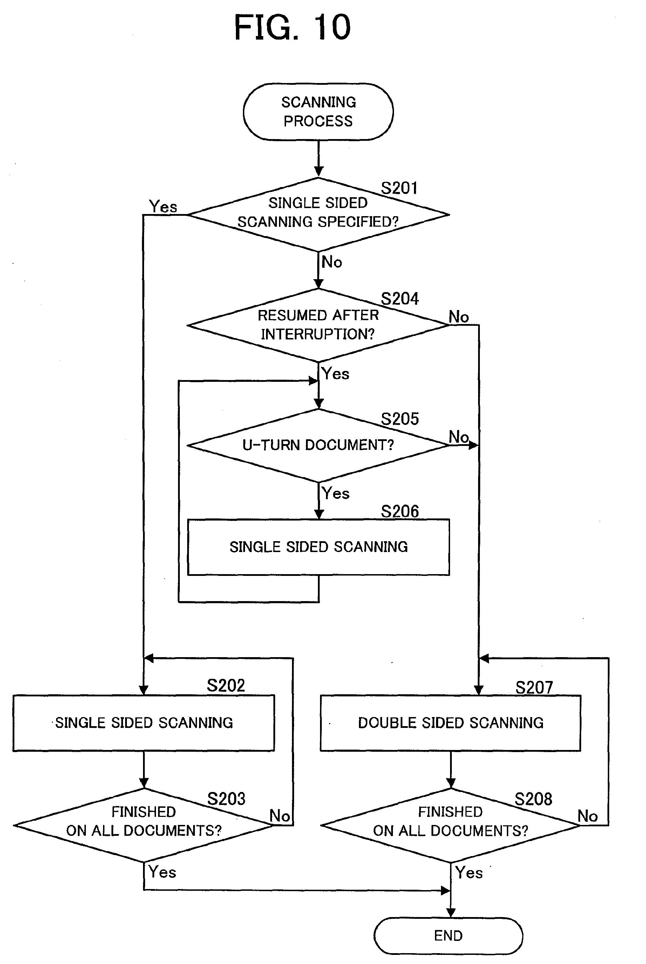

Fig. 10 is a flowchart, and steps S201 to S208 illustrate one example of the scanning process in the multifunction peripheral 100 of Fig. 8. The scanning process starts when the user operates the start key of the operation inputting unit 21a.

The single sided scanning is performed if the single sided scanning is specified when the start key is operated (steps S201, S202). In other words, the path switching unit 17 selects the single sided path, the document taken in by the document take-in unit 15 is transported to the scanning position C2 through the single sided path, and only the second surface thereof is scanned. The relevant scanning process is terminated after such single sided scanning is performed on all the documents placed on the paper feed tray 11 (step S203).

If the double sided scanning is specified when the start key is operated, whether or not the scanning process is the process resumed after the interruption is determined (step S204). For example, if the start key is operated within a constant time after the scanning is interrupted without the reset button being operated, determination is made as the resumed scanning process.

When determined as the resumed scanning process, whether or not the next document is the U-turn document is determined based on the U-turn document detection information from the U-turn document detection unit 31 (step S205). If it is the U-turn document, the single sided scanning is performed (step S206). In other words, the path switching unit 17 selects the single sided path, the document taken in by the document take-in unit 15 is transported to the scanning position C2 through the single sided path, and only the second surface thereof is scanned. Such single sided scanning is performed on all the U-turn documents.

After the single sided scanning is finished on all the U-turn documents, the double sided scanning is performed on the remaining documents (step S207). In other words, the path switching unit 17 selects the double sided path, the document taken in by the document take-in unit 15 passes the double sided path, and the first surface and the second surface are scanned in order. The scanning process is terminated after such double sided scanning is performed on all the U-turn documents (step S208).

The image scanning device according to the present embodiment includes the double sided path for scanning the first surface and the second surface of the document in order and the single sided path for scanning the second surface of the document, detects the U-turn document with the first surface scanned and the second surface not scanned when the scanning is interrupted, and transports the document of a number detected as the U-turn document at the time of the interruption to the single sided path in the resumed double sided scanning. Thus, the first surface of the same document can be prevented from being redundantly scanned when the double sided scanning of the document is interrupted and thereafter resumed. In particular, the scanning time can be shortened if the single sided path is shorter than the double sided path.

The image scanning device according to the present embodiment detects the number of U-turn documents, and transports the document of the above number to be scanned first to the single sided path in the resumed double sided scanning. Thus, when two or more U-turn documents are present, the redundant scanning of the first surface can be prevented with respect to each of the documents.

In the present embodiment, an example of the image scanning device in which the transportation path B3 for U-turn is arranged and in which the first surface and the second surface of the document are scanned at the same scanning position C2 has been described, but the present invention is not limited to such a case. For example, the present invention can be applied to an image scanning device in which the first surface and the second surface of the document are respectively scanned at different scanning positions. The present invention can also be applied to an image scanning device that does not include the transportation path B3 for U-turn such as a switchback type image scanning device.

In the above-described embodiment, an example of a configuration in which the first surface and the second surface of the document are scanned in order in the double sided scanning and only the second surface is scanned in the single sided scanning has been described, but the present invention is not limited to such a case. In other words, the present invention can be applied to an image scanning device having a configuration in which the second surface and the first surface of the document are scanned in order in the double sided scanning and only the first surface is scanned in the single sided scanning.

While the present invention has been described with respect to preferred embodiments thereof, it will be apparent to those skilled in the art that the disclosed invention may be modified in numerous ways and may assume many embodiments other than those specifically set out and described above. Accordingly, it is intended by the appended claims to cover all modifications of the present invention that fall within the true spirit and scope of the present invention.

## Claims

1. An image scanning device comprising:
a scanning specifying unit for specifying any of a double sided scanning and a single sided scanning for a scanning method of a document;
a first transportation path for double sided scanning for scanning a first surface and a second surface of the document in order;
a second transportation path for single sided scanning, shorter than the first transportation path, for scanning the second surface of the document;
a path switching unit for selecting any of the first transportation path and the second transportation path based on the specified scanning method; and
a document detection unit for detecting a document with the first surface scanned and the second surface not scanned when the double sided scanning is interrupted; wherein
the path switching unit selects the second transportation path for the transportation path of the first document in the resumed double sided scanning based on a detection result of the document detection unit.

2. The image scanning device according to claim 1, wherein the document detection unit detects the number of documents with the first surface scanned and the second surface not scanned when the double sided scanning is interrupted; and
the path switching unit switches from the second transportation path to the first transportation path based on the number of documents.

3. The image scanning device according to claim 1, wherein the path switching unit switches the transportation path at a branching point of the first transportation path and the second transportation path;
the first transportation path includes,
a first introducing path for transporting the document from the branching point to a scanning position, and
a U-turn path for causing the document that entered from the first introducing path and passed the scanning position to make a U-turn and again enter the scanning position; and
the second transportation path includes a second introducing path that joins with the U-turn path without passing the scanning position.

4. The image scanning device according to claim 1, further comprising:
a counter unit for counting the number of documents that are finished with the double sided scanning during continuous scanning; and
a notification unit for notifying a user the document to be scanned in the resumed double sided scanning based on a count result of the counter unit when the continuous scanning is interrupted.

5. The image scanning device according to claim 3, wherein the document detection unit determines the document existing in the U-turn path when the double sided scanning is interrupted as the document with the first surface scanned and the second surface not scanned.

6. The image scanning device according to claim 1, wherein the first transportation path includes a paper feed path for transporting the document from a paper feed tray to a first branching point, an introducing path dedicated for double sided scanning for transporting the document from a first branching point to a scanning position, a U-turn path for inverting a front and a back of the document that passed the scanning position a first time, and a discharge path for transporting the document that passed the scanning position a second time to an output tray;
the second transportation path includes the paper feed path, an introducing path dedicated for single sided scanning for transporting the document from the first branching point to the scanning position, one part of the U-turn path, and the discharge path; and
the path switching unit switches the path so that the document is transported to any of the introducing path dedicated for double sided scanning and the introducing path dedicated for single sided scanning at the first branching point.

7. The image scanning device according to claim 1, wherein the path switching unit determines whether or not a scanning start instruction is for resuming a scanning process when the scanning start instruction is inputted after the interruption of the double sided scanning, and selects the second transportation path for the transportation path of the first document in the resumed double sided scanning based on the detection result of the document detection unit when determined that the instruction is for resuming the scanning process.

8. The image scanning device according to claim 7, wherein the path switching unit determines that the scanning start instruction is for resuming the scanning process when the scanning start instruction is inputted with the double sided scanning specified without a reset instruction inputted within a constant time after the interruption of the double sided scanning.

9. A scanning method of a document comprising the steps of:
specifying any of a double sided scanning and a single sided scanning;
selecting a first transportation path for double sided scanning or a second transportation path for single sided scanning based on the specified scanning method; and
detecting a document with the first surface scanned and the second surface not scanned when the double sided scanning is interrupted; wherein
the second transportation path is selected in the resumed double sided scanning based on a detection result of the document detecting step in the path switching step.

10. The scanning method according to claim 9, wherein the number of documents with the first surface scanned and the second surface not scanned is detected when the double sided scanning is interrupted in the document detecting step; and
the second transportation path is switched to the first transportation path based on the number of documents in the path switching step.

11. The scanning method according to claim 9, wherein the transportation path is switched at a branching point of the first transportation path and the second transportation path in the path switching step;
the first transportation path includes,
a first introducing path for transporting the document from the branching point to a scanning position, and
a U-turn path for causing the document that entered from the first introducing path and passed the scanning position to make a U-turn and again enter the scanning position; and
the second transportation path includes a second introducing path that joins with the U-turn path without passing the scanning position.

12. The scanning method according to claim 9, further comprising the steps of:
counting the number of documents that are finished with the double sided scanning during continuous scanning; and
notifying a user the document to be scanned in the resumed double sided scanning based on a count result of a counter unit when the continuous scanning is interrupted.

13. The scanning method according to claim 11, wherein the document existing in the U-turn path when the double sided scanning is interrupted is determined as the document with the first surface scanned and the second surface not scanned in the document detecting step.

14. The scanning method according to claim 9, wherein the first transportation path includes a paper feed path for transporting the document from a paper feed tray to a first branching point, an introducing path dedicated for double sided scanning for transporting the document from a first branching point to a scanning position, a U-turn path for inverting a front and a back of the document that passed the scanning position a first time, and a discharge path for transporting the document that passed the scanning position a second time to an output tray;
the second transportation path includes the paper feed path, an introducing path dedicated for single sided scanning for transporting the document from the first branching point to the scanning position, one part of the U-turn path, and the discharge path; and
the path is switched so that the document is transported to any of the introducing path dedicated for double sided scanning and the introducing path dedicated for single sided scanning at the first branching point in the path switching step.

15. The scanning method according to claim 9, wherein, in the path switching step, whether or not a scanning start instruction is for resuming a scanning process is determined when the scanning start instruction is inputted after the double sided scanning is interrupted, and the second transportation path is selected for the transportation path of the first document in the resumed double sided scanning based on the detection result in the document detection step when determined that the instruction is for resuming the scanning process.

16. The scanning method according to claim 15, wherein, in the path switching step, the scanning start instruction is determined as for resuming the scanning process when the scanning start instruction is inputted with the double sided scanning specified without a reset instruction inputted within a constant time after the interruption of the double sided scanning.
